Europäisches Patentamt

European Patent Office

Office européen des brevets

(19)

(11) Publication number: **0 415 568 A2**

# EUROPEAN PATENT APPLICATION

(12)

(21) Application number: 90308477.0

(51) Int. Cl.⁵: **A01N 25/12**, A01N 25/14

(22) Date of filing: 01.08.90

(30) Priority: 01.09.89 GB 8919834

(43) Date of publication of application:
06.03.91 Bulletin 91/10

(84) Designated Contracting States:
AT BE CH DE DK ES FR GB GR IT LI LU NL SE

(71) Applicant: IMPERIAL CHEMICAL INDUSTRIES
PLC
Imperial Chemical House, Millbank
London SW1P 3JF(GB)

Applicant: ICI JAPAN LIMITED
Palace Building, 1-1, Marunouchi 1-chome
Chiyoda-ku, Tokyo(JP)

(72) Inventor: Warrington, Roger Paul
23 Radical Ride
Wokingham, Berkshire(GB)
Inventor: Ramsay, Guy
74 Oldsted
Crown Wood, Bracknell, Berkshire(GB)
Inventor: Marrs, Gordon James
South Riding, Belmont Park Road
Maidenhead, Berkshire(GB)
Inventor: Nakahara, Takeyoshi, c/o ICI Japan
Ltd
Palace Building No. 1-1, Marunouchi
1-chome
Chiyoda-ku, Tokyo 100(JP)

(74) Representative: Bishop, Nigel Douglas et al
Imperial Chemical Industries PLC Legal
Department: Patents PO Box 6 Bessemer
Road
Welwyn Garden City Herts, AL7 1HD(GB)

(54) Insecticidal compositions.

(57) The invention provides insecticidal compositions for use in the application of insecticides to paddy-field rice, comprising a solid carrier, at least one insecticidal active ingredient, and a water-immiscible oil, said water-immiscible oil being a straight or branched chain, saturated or unsaturated $C_{8-18}$ alcohol or a lower alkyl ester of a straight or branched chain, saturated or unsaturated $C_{8-18}$ monocarboxylic acid, said water-immiscible oil being miscible with the insecticidal active ingredient and having a specific gravity of less than 1 and a boiling point at atmospheric pressure of greater than 200° C. The invention also provides processes for their preparation and a method of controlling insect pests of rice in a paddy-field.

## INSECTICIDAL COMPOSITIONS

This invention relates to insecticidal compositions for use in the application of insecticides to paddy-field rice, to processes for their preparation, and to a method of controlling insect pests of rice in a paddy-field.

Hitherto insecticides have been applied to paddy-fields in the form of soluble, dispersible or adsorbent granules which release insecticide into the water, or by pour-on liquids which dispense the active ingredient on the surface of the water.

According to the present invention there is provided an insecticidal composition for application to paddy-fields, said composition comprising a solid carrier, at least one insecticidal active ingredient, and a water-immiscible oil, said water-immiscible oil being a straight or branched chain, saturated or unsaturated $C_{8-18}$ alcohol or a lower alkyl ester of a straight or branched chain, saturated or unsaturated $C_{8-18}$ monocarboxylic acid, said water-immiscible oil being miscible with the insecticidal active ingredient and having a specific gravity of less than 1 and a boiling point at atmospheric pressure of greater than 200°C.

Insecticidal compositions according to the present invention when applied to rice paddy-fields initially undergo break-up or dissolution of the solid carrier thereby releasing the insecticide in solution in the water-immiscible oil which, because of its low specific gravity, rises to the surface to form an oily film. The compositions offer the advantages of ease of handling, storage and application, and by releasing their active ingredient at the point of application offer advantages for controlling distribution and prevention of undesired drift.

The suitability of the compositions of the invention for application to paddy-fields makes them of particular alue as a means of application of insecticides useful for the control of insect pests of rice, for example rice water weevil ( Lissorhoptrus oryzophilus ); hoppers such as brown plant hopper ( Nilaparvata lugens ), small brown planthopper ( Laodelphax striaellus ), white backed plant hopper ( Sogatella furcifera ) and leaf hoppers ( Nephotettix spp ).

Compositions according to the invention are most suitably in the form of granules, whereby they offer a similar mode of action to that of a pour-on oil formulation, but in a more conveniently handled form.

Suitable solid carriers may be soluble, insoluble, or dispersible in water, or mixtures of these provided they allow the release of the solution of the insecticide into the water.

Examples of soluble carriers include alkali metal, magnesium or ammonium salts of inorganic and organic acids, for example the sodium, potassium, magnesium or ammonium salts of hydrochloric acid, sulphuric acid, nitric acid or acetic acid, sodium carbonate, sodium sesquicarbonate, sugars, and mono- and di-saccharides such as lactose or sucrose, or water-insoluble polymers. Suitable water dispersible or water-insoluble carriers include clay, talc, calcium carbonate, diatomaceous earth, white carbon, kaolin, bentonite, starch, kieselguhr, glass powder, pumice, sand and brick fragments.

The granules may additionally contain effervescence-initiating components in order to ensure rapid release of the active ingredient solution from the granule. Examples of effervesence-initiating components are described in United Kingdom Patent Application No. GB-2,184,946-A. They include conventional effervescent couples, for example, a solid acid and a carbonate or bicarbonate, for example citric or malic acid combined with sodium bicarbonate.

Other conventional formulation agents may be incorporated into the granules such as buoyancy aids, disintegrants, dispersing agents, binding agents, particularly water soluble binding agents, and surface active agents.

The compositions of the invention may contain a single insecticidal active ingredient, or may contain a mixture of two or more insecticidal agents to broaden the spectrum of activity or increase persistence.

Additional active ingredients may provide synergistic or complementary activity, for example by improving kill or knockdown of target pests or by overcoming repellency.

Suitable insecticidal agents for inclusion in the compositions of the invention, either singly or in admixture, include in particular rice insecticides suitable for paddy-field application, for example the compounds described in UK Patent Application No. GB-2178739-A, such as
1,1,1-trifluoro-2-(4-ethoxyphenyl)-3-(3-phenoxybenzyloxy)propane,
1,1,1-trifluoro-2-(4-ethoxyphenyl)-3-[3-(4-chlorophenoxy)benzyloxy]propane,
1,1,1-trifluoro-2-(4-trifluoromethoxyphenyl)-3-(3-phenoxybenzyloxy)propane,
1,1,1-trifluoro-2-(4-ethoxyphenyl)-3-(3-phenoxy-4-fluorobenzyloxy)propane or
1,1,1-trifluoro-2-(4-ethoxyphenyl)-3-[3-(4-bromophenoxy)benzyloxy]propane; etofenprox; cartap; buprofezin; chlorpyrifos-methyl; fenthion; fenitrothion; cycloprothrin; isoxathion; phenthoate; BPMC (fenobucarb); XMC (xylylcarb); carbaryl; the compounds described in European Patent Application No. 240121-A, such as 1,1,1-trifluoro-2-(4-ethoxyphenyl)-5-(4-fluoro-3-phenoxyphenyl)pentane; the compounds described in PCT Patent Application No. WO88/08416, for example 2-(phenoxybenzyloxy)-1-cyclopropyl-1-(4-chlorophenyl)-ethane or 2-(4-fluoro-3-phenoxybenzyloxy)-1-cyclopropyl-1-(4-chlorophenyl)ethane; insecticidally active silaneophanes such as (4-ethoxyphenyl)-(dimethyl)-[3-(4-fluoro-3-phenoxyphenyl)propyl]-silane; or nitromethylene insecticides and their analogues, for example 1-[(6-chloro-3-pyridinyl)methyl]-N-nitro-1H-imidazol-2-amine

Other insecticides suitable for inclusion in the compositions, either singly or in admixture with other insecticides include

(a) natural pyrethrins or synthetic pyrethroids such as permethrin, fenvalerate, deltamethrin, cyhalothrin, biphenthrin, fenpropathrin, cyfluthrin, tefluthrin, empenthrin, cypermethrin, tetramethrin, bioallethrin, fenfluthrin, prallethrin, 5-benzyl-3-furylmethyl (E)-(1R,3S)-2,2-dimethyl-3-(2-oxothiolan-3-ylidenemethyl)-cyclopropane carboxylate and pentafluorobenzyl ( cis )-3-[2-fluoro-2-(methoxycarbonyl)ethenyl]-2,2-dimethylcyclopropane carboxylate;

(b) organophosphates such as pirimiphos-methyl, profenofos, sulprofos, dichlorvos, methyl parathion, azinphos-methyl, demeton-s-methyl, heptenophos, thiometon, fenamiphos, triazophos, dimethoate, malathion, phosalone, fensulphothion, fonofos, phorate, phoxim and diazinon;

(c) carbamates (including aryl carbamates) such as pirimicarb, cloethocarb, carbofuran, ethiofencarb, aldicarb, thiofurox, carbosulfan, bendiocarb, propoxur and oxamyl;

(d) benzoyl ureas such as triflumuron and chlorofluazuron;

(e) hormones and synthetic mimics thereof such as juvenile hormone, juvabione, ecdysones, methoprene and hydroprene;

(f) pheromones;

(g) organochlorine compounds such as benzene hexachloride, DDT, chlordane, dieldrin and endosulfan.

The compositions of the invention may also include, in addition to one or more insecticidal agents, one or more fungicidal agents where it is desired to control fungal and insect infestations simultaneously. Suitable fungicides for inclusion in the compositions are edifenhos, tricylazole, isoprothiolane, and flutolanil.

The following combinations are of particular interest as pesticidal mixtures suitable for inclusion in the compositions of the invention:

(i) a synthetic pyrethroid and an organophosphate insecticide, for example chlorpyrifos-methyl or diazinon and one of the compounds described in UK Patent Application No. GB-2178739-A, such as 1,1,1-trifluoro-2-(4-ethoxyphenyl)-3-(3-phenoxybenzyloxy)propane, 1,1,1-trifluoro-2-(4-ethoxyphenyl)-3-[3-(4-chlorophenoxy)benzyloxy]propane, 1,1,1-trifluoro-2-(4-trifluoromethoxyphenyl)-3-(3-phenoxybenzyloxy)propane, 1,1,1-trifluoro-2-(4-ethoxyphenyl)-3-(3-phenoxy-4-fluorobenzyloxy)propane or 1,1,1-trifluoro-2-(4-ethoxyphenyl)-3-[3-(4-bromophenoxy)benzyloxy]propane;

(ii) an organophosphate insecticide and a carbamate insecticide, for example chlorpyrifos-methyl or diazinon and BPMC (fenobucarb);

(iii) a synthetic pyrethroid and a fungicide, for example edifenphos and one of the compounds described in UK Patent Application No. GB-2178739-A, such as 1,1,1-trifluoro-2-(4-ethoxyphenyl)-3-(3-phenoxybenzyloxy)propane, 1,1,1-trifluoro-2-(4-ethoxyphenyl)-3-[3-(4-chlorophenoxy)benzyloxy]propane, 1,1,1-trifluoro-2-(4-trifluoromethoxyphenyl)-3-(3-phenoxybenzyloxy)propane, 1,1,1-trifluoro-2-(4-ethoxyphenyl)-3-(3-phenoxy-4-fluorobenzyloxy)propane or 1,1,1-trifluoro-2-(4-ethoxyphenyl)-3-[3-(4-bromophenoxy)benzyloxy]propane;

(iv) a synthetic pyrethroid, an organphosphate insecticide and a fungicide, for example one of the compounds described in UK Patent Application No. GB-2178739-A, such as 1,1,1-trifluoro-2-(4-ethoxyphenyl)-3-(3-phenoxybenzyloxy)propane, 1,1,1-trifluoro-2-(4-ethoxyphenyl)-3-[3-(4-chlorophenoxy)benzyloxy)propane, 1,1,1-trifluoro-2-(4-trifluoromethoxyphenyl)-3-(3-phenoxybenzyloxy)propane, 1,1,1-trifluoro-2-(4-ethoxyphenyl)-3-(3-phenoxy-4-fluorobenzyloxy)propane or 1,1,1-trifluoro-2-(4-ethoxyphenyl)-3-[3-(4-bromophenoxy)benzyloxy]propane, and chlorpyrifos-methyl or diazinon, and edifenphos.

It is important that the oil employed in the composition is miscible with the desired active ingredient or ingredients and this can be readily determined by simple routine tests. Furthermore in order to ensure that the active ingredient or ingredients remain on the surface of the water, the specific gravity of the oil must be low, i.e. less than 1 (preferably below 0.9). However, since the active ingredient or ingredients are on the water surface, they may sink if the carrier is too volatile. Hence the oil must have a low volatility, as indicated by a boiling point of greater than 200° C, and preferably above 250° C.

Suitable oils are oleyl alcohol, decyl alcohol, tridecyl alcohol and Synprol (Synprol is a registered trade mark for a synthetic mixture of mainly straight chain $C_{13-15}$ alcohols). Other suitable oils include lower alkyl esters and glycol esters, for example the methyl, ethyl, propyl or isopropyl esters, of oleic acid, lauric acid or mixed fatty acids of natural origin, for example coconut oil fatty acid. The term lower alkyl as used herein refers to straight or branched chain alkyl groups containing from 1 to 4 carbon atoms.

The amount of active ingredient or ingredients in the compositions of the invention will depend on the ingredient or ingredients and the application for which the compositions are to be used. Typically, the active ingredient or ingredients will be present in an amount of from 0.1 to 20% by weight of the composition, and preferably from 0.5 to 10% by weight of the composition.

The compositions according to the invention are most suitably prepared in the form of granules using conventional processes for granule formulation such as extrusion, agglomeration, impregnation or coating.

The following Examples illustrate the preparation of typical formulations according to the invention. In the Examples, active ingredients are referred to as indicated below:

Compound No 1: permethrin
Compound No 2: etofenprox
Compound No 3: 1,1,1-trifluoro-2-(4-ethoxyphenyl)-3- (3-phenoxybenzyloxy)propane
Compound No 4: 1,1,1-trifluoro-2-(4-ethoxyphenyl)-3-[3-(4-chlorophenoxy)benzyloxy]propane
Compound No 5: 1,1,1-trifluoro-2-(4-trifluoromethoxyphenyl)-3-(3-phenoxybenzyloxy)propane
Compound No 6: 1,1,1-trifluoro-2-(4-ethoxyphenyl)-3-(3-phenoxy-4-fluorobenzyloxy)propane.
Compound No 7: pirimiphos-methyl
Compound No 8: (4-ethoxyphenyl)-(dimethyl)[3-(4-fluoro-3-phenoxyphenyl)propyl]silane
Compound No. 9: 1-[(6-chloro-3-pyridinyl)methyl]-N-nitro-1H-imidazol-2-amine

In the following Examples, the amount of each component present in the composition is expressed as a percentage by weight, indicated by the abbreviation % W/W.

EXAMPLE 1

This Example illustrates the preparation of soluble granule according to the invention.

| (i) Ingredients for soluble granule: | % W/W |
|---|---|
| Active Ingredient (Compound No 3) | 0.75 |
| "Synprol" | 10.0 |
| Sodium lignosulphonate | 5.0 |
| Sodium sesquicarbonate | to 100.0 |
| "Synprol" is a trade mark for a synthetic mixture of $C_{13-15}$ alcohols | |

| (ii) Ingredients for soluble granule | % W/W |
|---|---|
| Active ingredient (Compound No. 2) | 1.5 |
| Oleyl alcohol | 12.0 |
| Sodium lignosulphonate | 5.0 |
| Montmorillonite clay | 10.0 |
| Sodium sesquicarbonate | to 100.0 |

Method of preparation:

The ingredients are blended together and mixed with water until the composition has the consistency of a stiff paste. The mixture is then extruded using suitable granule extruding equipment (for example a Fuji Paudal granulator). The granules are dried and graded by seiving to remove under-or over-sized particles.

EXAMPLE 2

This Example illustrates the preparation of dispersible granules according to the invention. In each case the method of preparation was the same as that described in Example 1.

| (i) Ingredients for dispersible granule: | % W/W |
|---|---|
| Active ingredient (Compound No 6) | 1.0 |
| Oleyl alcohol | 12.0 |
| Sodium lignosulphonate | 5.0 |
| Kaolinite clay | 30.0 |
| Magnesium sulphate | to 100.0 |

| (ii) Ingredients for dispersible granule: | % W/W |
|---|---|
| Active ingredient (Compound No 4) | 1.5 |
| Methyl oleate | 5.0 |
| Sodium lignosulphonate | 1.0 |
| Sodium dioctylsulphosuccinate | 5.0 |
| Bentonite | 20.0 |
| China clay | to 100.0 |

| (iii) Ingredients for dispersible granule containing two insecticidal agents, with broad spectrum utility: | |
|---|---|
| | % W/W |
| Active ingredient 1 (Compound No. 7) | 2.5 |
| Active ingredient 2 (Compound No. 4) | 0.75 |
| Oleyl alcohol | 10.0 |
| Sodium lignosulphonate | 5.0 |
| Sodium dioctylsulphosuccinate | 5.0 |
| Bentonite | 20.0 |
| China clay | to 100.0 |

| (iv) Ingredients for dispersible granule containing an insecticidal and a fungicidal agent: | % W/W |
|---|---|
| Insecticidal agent (Compound No. 4) | 0.75 |
| Fungicidal agent (isoprothiolane) | 2.5 |
| Oleyl alcohol | 10.0 |
| Sodium lignosulphonate | 5.0 |
| Bentonite | 20.0 |
| China clay | to 100.0 |

| (v) Ingredients for dispersible granule: | % W/W |
|---|---|
| Insecticidal agent (Compound No. 2) | 0.75 |
| Oleyl alcohol | 10.0 |
| Sodium lignosulphonate | 5.0 |
| Bentonite | 20.0 |
| China clay | to 100.0 |

| (vi) Ingredients for dispersible granule: | % W/W |
|---|---|
| Insecticidal agent (Compound No. 8) | 1.00 |
| Oleyl alcohol | 10.0 |
| Sodium lignosulphonate | 5.0 |
| Bentonite | 20.0 |
| China clay | to 100.0 |

| (vii) Ingredients for dispersible granule: | % W/W |
|---|---|
| Insecticidal agent (Compound No. 9) | 0.75 |
| Oleyl alcohol | 10.0 |
| Sodium lignosulphonate | 5.0 |
| Bentonite | 20.0 |
| China clay | to 100.0 |

EXAMPLE 3

This Example illustrates the preparation of an effervescent granule according to the invention.

| Ingredients: | % W/W |
|---|---|
| Active ingredient (Compound No 5) | 0.75 |
| Oleyl alcohol | 5.0 |
| Sodium lignosulphonate | 2.5 |
| Sodium dioctylsulphosuccinate | 2.5 |
| Sodium sesquicarbonate | 20.0 |
| Adipic acid | 27.0 |
| Magnesium sulphate | to 100.0 |

Method of preparation:

The granule base was prepared by non-aqueous extrusion. The active ingredient and oleyl alcohol were introduced into the granule base by solvent impregnation.

EXAMPLE 4

This Example illustrates the preparation of an effervescent granule according to the invention.

| (i) Ingredients: | % W/W |
|---|---|
| Active ingredient (Compound No 4) | 2.0 |
| Lignosulphonate dispersant ("POLYFON H") | 2.7 |
| Anionic surfactant ("AEROSOL OTB") | 2.7 |
| Sodium sesquicarbonate ("CREX") | 21.0 |
| Adipic acid | 29.2 |
| Hydroxypropyl cellulose ("KLUCEL L") | 6.75 |
| Oleyl alcohol | 5.0 |
| Magnesium sulphate (anhydrous) | to 100.0 |

| (ii) Ingredients: | % W/W |
|---|---|
| Active ingredient (Compound No 4) | 0.5 |
| Lignosulphonate dispersant ("POLYFON H") | 2.7 |
| Anionic surfactant ("AEROSOL OTB") | 2.7 |
| Sodium sesquicarbonate ("CREX") | 21.0 |
| Adipic acid | 29.2 |
| Hydroxypropyl cellulose ("KLUCEL L") | 6.75 |
| Oleyl alcohol | 5.0 |
| Magnesium sulphate (anhydrous) | to 100.0 |

In each case the granule base was prepared by non-aqueous extrusion. The active ingredient and oleyl alcohol were introduced into the granule base by solvent impregnation.
POLYFON, AEROSOL OTB, CREX and KLUCEL are Registered Trade Marks.

EXAMPLE 5

This Example illustrates the preparation of coated granules:

| (i) Ingredients for coated granule: | % W/W |
|---|---|
| Active ingredient (Compound No. 3) | 0.85 |
| Oleyl alcohol | 7.0 |
| 10% polyvinyl alcohol solution | 2.0 |
| Silica | 5.0 |
| Calcium carbonate granules | to 100.0 |

| (ii) Ingredient for coated granule: | % W/W |
|---|---|
| Active ingredient (Compound No. 8) | 1.0 |
| Oleyl alcohol | 7.0 |
| 10% polyvinyl alcohol solution | 2.0 |
| Silica | 5.0 |
| Calcium carbonate granules | to 100.0 |

| (iii) Ingredients for coated granule: | % W/W |
|---|---|
| Active ingredient (Compound No. 2) | 0.75 |
| Oleyl alcohol | 7.0 |
| 10% polyvinyl alcohol solution | 2.0 |
| Silica | 5.0 |
| Calcium carbonate granules | to 100.0 |

| (iv) Ingredients for coated granule: | % W/W |
|---|---|
| Active ingredient (Compound No. 4) | 0.85 |
| Oleyl alcohol | 7.0 |
| 10% polyvinyl alcohol solution | 2.0 |
| Silica | 5.0 |
| Calcium carbonate granules | to 100.0 |

| (v) Ingredients for coated granule: | % W/W |
|---|---|
| Active ingredient (Compound No. 9) | 0.85 |
| Oleyl alcohol | 7.0 |
| 10% polyvinyl alcohol solution | 2.0 |
| silica | 5.0 |
| Calcium carbonate granules | to 100.0 |

The granules were prepared by coating pre-formed calcium carbonate granules with a powder premix of active ingredient and oleyl alcohol on silica, and spraying with polyvinyl alcohol binder solution.

EXAMPLE 6

This Example illustrates the composition of standard granules prepared for reference purposes for the comparative data of Examples 7 and 8.

| (i) Ingredients: | % W/W |
|---|---|
| Active ingredient (Compound No 4) | 2.0 |
| Non-ionic emulsifier ("SYNPERONIC NX") | 0.15 |
| Alkylbenzene solvent ("SOLVESSO 200") | 0.1 |
| Calcium carbonate | to 100.0 |

| (ii) Ingredients: | % W/W |
|---|---|
| Active ingredient (Compound No 4) | 0.5 |
| Non-ionic emulsifier ("SYNPERONIC NX") | 0.15 |
| Alkylbenzene solvent ("SOLVESSO 200") | 0.1 |
| Calcium carbonate | to 100.0 |

In each case the granule was prepared by spray coating. SYNPERONIC and SOLVESSO are Registered Trade Marks.


EXAMPLE 7


This Example illustrates the efficacy of granule compositions according to the invention compared with standard granule formulations.

In a field trial, Compound No 4 was applied to rice-paddy plots infested with Lissorhoptrus oryzophilus (rice water weevil). Each plot was approximately 12 m$^2$ and was surrounded by plastic sheeting extending 20 cm above the water level and 20 cm below the muddy bottom of the paddy. The test compositions were applied 34 days after transplanting and leaf damage and adult rice water weevil counts were assessed at 7, 14 and 28 days after treatment. The active ingredient was applied in the following compositions:

Composition A : Effervescent granule as described in Example 4 (i) (20g/kg, equivalent to 400g active ingredient per hectare)

Composition B : Effervescent granule as described in Example 4 (ii) (5g/kg, equivalent to 100g active ingredient per hectare)

Composition C : Standard granule as described in Example 6 (i) (20g/kg, equivalent to 400g active ingredient per hectare)

Composition D : Standard granule as described in Example 6 (ii) (5g/kg, equivalent to 100g active ingredient per hectare).

The results are shown in the Table of Results, and demonstrate a significant reduction in infestation and leaf damage for the compositions according to the invention (Compositions A and B) when compared with standard granule formulations (Compositions C and D).

| TABLE OF RESULTS - EXAMPLE 7 | | | | | |
|---|---|---|---|---|---|
| Composition | Application Rate (gai/ha) | % Damaged Leaves | | | Number of adult RWW per 10 hills |
| | | 7DAT | 14DAT | 28DAT | 14DAT |
| A | 400 | 28.0 | 25.3 | 27.6 | 3.7 |
| B | 100 | 29.9 | 40.7 | 48.3 | 16.0 |
| C | 400 | 44.6 | 54.8 | 52.3 | 18.0 |
| D | 100 | 62.5 | 75.1 | 59.0 | 26.4 |

EXAMPLE 8

This Example illustrates the efficiency of granules according to the invention compared with standard granule and pour-on oil formulations.

In a further field trial, Compound No. 4 was applied to rice paddy plots infected with Lissorhoptrus oryzophilus (rice water weevil) as described for Example 7, and leaf damage assessed at 7 and 21 days after treatment. Compound No. 4 was applied in the following compositions:

Composition A: A soluble granule similar to that described in Example 1, containing 0.75% Compound No 4 (equivalent to 187.5g active ingredient per hectare)

Composition B: A standard granule similar to Example 6, containing 0.75% Compound No 4 (equivalent to 187.5g active ingredient per hectare)

Composition C: A pour-on oil formulation containing 5% Compound No 4, (equivalent to 187.5g active ingredient per hectare)

The results shown in the Table demonstrate the superior control exhibited by the granules of the invention in terms of reduced leaf damage over a 21 day period, when compared with a standard granule formulation.

The Table also illustrates that the control given by the invention compositions is equivalent or slightly better than that given by a pour-on oil formulation.

| TABLE OF RESULTS - EXAMPLE 8 | | | | |
|---|---|---|---|---|
| Composition | Appln Rate g ai/ha | % damaged leaves (mean of 10 hills/plot) | | |
| | | Pre-Appln | 7 DAT | 21 DAT* |
| Untreated-control | | 42.0 | 55.4 | 68.5 A |
| A | 187.5 | 47.1 | 29.4 | 23.3 DE |
| B | 187.5 | 35.2 | 44.9 | 57.4 AC |
| C | 187.5 | 47.5 | 38.2 | 28.0 B |

* Treatment means with no letter in common are significantly different at the 5% probability level.

## Claims

1. An insecticidal composition for application to paddy-fields, said composition comprising a solid carrier, at least one insecticidal active ingredient and a water-immiscible oil, said water-immiscible oil being a straight or branched chain, saturated or unsaturated $C_{8-18}$ alcohol or a lower alkyl ester of a straight or branched chain, saturated or unsaturated $C_{8-18}$ monocarboxylic acid, said water-immiscible oil being miscible with said insecticidal active ingredient and having a specific gravity of less than 1 and a boiling point at atmospheric pressure of greater than 200°C.

2. An insecticidal composition as claimed in claim 1 wherein the oil is selected from oleyl alcohol, decyl alcohol, tridecyl alcohol, a synthetic mixture of mainly straight chain $C_{13-15}$ alcohols, a glycol ester, and the methyl, ethyl, propyl or isopropyl ester of oleic acid, lauric acid or mixed fatty acids of natural origin.

3. An insecticidal composition as claimed in claim 1 or claim 2 wherein the insecticidal active ingredient is a rice insecticide suitable for paddy-field application.

4. An insecticidal composition as claimed in claim 1 wherein the rice insecticide is selected from 1,1,1-trifluoro-2-(4-ethoxyphenyl)-3-(3-phenoxybenzyloxy)propane, 1,1,1-trifluoro-2-(4-ethoxyphenyl)-3-[3-(4-chlorophenoxy)benzyloxy]propane,1,1,1-trifluoro-2-(4-trifluoromethoxyphenyl)-3-(3-phenoxybenzyloxy)-propane, 1,1,1-trifluoro-2-(4-ethoxyphenyl)-3-(3-phenoxy-4-fluorobenzyloxy)propane, 1,1,1-trifluoro-(4-ethoxyphenyl)-3-[3-(4-bromophenoxy) benzyloxy]propane, etofenprox, cartap, buprofezin, chlorpyrifos-methyl, fenthion, fentrothion, cycloprothrin, isoxathion, phenthoate, fenobucarb, xylylcarb, carbaryl, 1,1,1-trifluoro-2-(4-ethoxyphenyl)-5-(4-fluoro-3-phenoxyphenyl)pentane, 2-(phenoxybenzyloxy)-1-cyclopropyl-1-(4-chlorophenyl)ethane, 2-(4-fluoro-3-phenoxybenzyloxy)-1-cyclopropyl-1-(4-chlorophenyl)ethane, (4-ethoxyphenyl)-(dimethyl)-[3-(4-fluoro-3-phenoxyphenyl)propyl]-silane, 1-[6-chloro-3-pyridinyl)methyl]-N-nitro-1H-imidazol-2-amine.

5. An insecticidal composition as claimed in any preceding claim, further comprising one or more fungicidal agents.

6. An insecticidal composition as claimed in claim 5 wherein the or each fungicidal agent is selected from edifenphos, tricyclazole, isoprothiolane and flutolanil.

7. An insecticidal composition as claimed in any preceding claim in the form of a granule.

8. A process for the preparation of a composition as claimed in any preceding which comprises admixture of a solid carrier, at least one insecticidal active ingredient and a water immiscible oil, said water-immiscible oil being a straight or branched chain, saturated or unsaturated $C_{8-18}$ alcohol, or a lower alkyl ester of a straight or branched chain, saturated or unsaturated $C_{8-18}$ monocarboxylic acid, said water-immiscible oil being miscible with the insecticidal active ingredient and having a specific gravity of less than 1 and a boiling point at atmospheric pressure of greater than 200°C.

9. A process for the preparation of an insecticidal composition as claimed in claim 7 wherein the granule is prepared by extrusion, agglomeration, impregnation or coating.

10. A method of controlling insect pests of rice which comprises application to a paddy field in which rice is cultivated of an insecticidally effective amount of a composition according to any one of claims 1 to 7.